# EUROPEAN PATENT SPECIFICATION

(11) **EP 0 651 946 B1**
(45) Date of publication and mention of the grant of the patent: **18.04.2001**
(21) Application number: 94203261.6
(22) Date of filing: 09.11.1994
(51) Int. Cl.: A23B 7/148, A23L 3/3418

(54) **Method and apparatus for controlling the composition of a gaseous mixture in a space**
Verfahren und Vorrichtung zur Steuerung einer Gasgemischzusammensetzung in einem Raum
Procédé et appareil de contrôle de composition de mélanges gazeux dans un espace

(30) Priority: 09.11.1993 NL 9301943
(43) Date of publication of application: 10.05.1995
(73) Proprietor: ELEKTROTECHNISCH BUREAU T.C. VAN AMERONGEN B.V., NL-4041 CN Kesteren (NL); SCHELFHOUT COMPUTER SYSTEMEN N.V., B-9190 Stekene (BE)
(72) Inventor: Bakker, Lieuwe, NL-6708 NX Wageningen (NL); Van Gijsel, Wilfried, B-9112 Sinaai (BE)
(74) Representative: Bartelds, Erik

(56) References cited:
- EP-A- 0 160 325
- EP-A- 0 315 309
- EP-A- 0 353 021
- EP-A- 0 520 863
- WO-A-91/11913
- GB-A- 434 458
- US-A- 5 120 329

## Description

The invention relates to a method for controlling the composition of a gas mixture present in a space by detecting the concentration of at least one component of the gas mixture and extracting from the space and subjecting to a treatment at least a part of the gas mixture, the concentration of the at least one component being detected in the part of the gas mixture extracted from the space. Such a method is known from EP-A-0 315 309.

In a conventional method, as disclosed e.g. in EP-A-0 160 325, which is applied particularly for controlling the atmosphere in cooling cells in which fruit is stored, a periodic sample of the atmosphere in the cooling cell was taken. This sample was analyzed and the thus found composition of the atmosphere was compared to a composition of the atmosphere desired for optimum storage life of the fruit. When unacceptable variations were determined between the detected and the desired composition of the atmosphere in the cooling cell the atmosphere was treated, for instance by connecting the cooling cell to a so-called active carbon scrubber, with which an excess of carbon dioxide (CO₂) can be removed from the atmosphere, or with a nitrogen (N₂) generator, with which the oxygen (O₂) content in the cooling cell could be limited. Relatively oxygen-rich ambient air can also be admitted by opening a valve in a wall of the cooling cell. The above stated treatments of the atmosphere in the cooling cell can also be performed periodically, for instance under the control of a computer program.

A drawback to this conventional method was that, in order to minimize the effect on the atmosphere in the cooling cell resulting from taking the sample, the latter had to have a relatively small volume in relation to the volume of the cooling cell. Use was therefore made for taking the sample of thin sample ducts which ran from the cooling cell to a central analysis and control device. Since such a central analysis and control device was relatively expensive and thus had to be used simultaneously for the greatest possible number of cooling cells, the sample ducts are comparatively long. There was therefore a great risk of the sample duct becoming blocked, for instance through freezing of the gas sample present therein as a result of the low temperatures prevailing in the vicinity of cooling cells. Particularly in winter it hereby became difficult to obtain a reliable picture of the state of the atmosphere in a large number of cooling cells. In order to prevent this blockage through freezing attempts were made to insulate and/or heat the sample ducts as well as possible. However, this required a relatively large investment in insulation and heating materials, while the cost of installing the sample ducts and arranging insulation and heating materials thereon was also considerable.

From EP-A-0 315 309 a method is known for producing a controlled atmosphere in a single storage area. This prior art method involves continuously extracting gas from the storage area, passing part of the extracted gas through an O₂/CO₂-sensor, having the gas flow through a separator and returning the resulting nitrogen to the storage area. By using the concentration of a part of the gas that is necessary guided to the separator or scrubber for treatment, the need for arranging a separate small diameter sampling duct to the storage area is obviated. This results in a more reliable sampling under all conditions, while a considerable saving in installation cost and time is achieved at the same time. However, all gas extracted from the storage area is thus treated, and the prior art method does nog allow mere sampling of the gas.

The invention therefore has for its object to provide a method of the above described type with which the gas mixture in the space may be sampled without being treated. This is achieved according to the invention in that a portion of the gas mixture is periodically extracted from the space and subjected to a treatment in accordance with a predetermined program and in that the detection of the concentration is performed periodically in accordance with a predetermined program, the frequency of the periodic concentration detection being at least as great as the frequency of the periodic treatment, and part of the gas mixture extracted from the space for detecting the concentration being carried back into the space without being treated. This allows samples to be taken between subsequent treatment cycles.

Preferably applied ways of performing the method according to the invention form the subject-matter of the dependent claims 2 and 3.

The invention further relates to an apparatus with which the above described method can be performed in simple manner. The above-mentioned prior art document EP-A-0 315 309 discloses an apparatus for controlling the composition of a gas mixture present in a space, comprising means for treating a gas mixture extracted from the space, which means are connected to the space over at least one supply duct provided with first controllable closing means and at least one discharge duct provided with second controllable closing means, control means connected for signal generating to the gas mixture treatment means, and means connected to the supply duct for detecting the concentration of at least one component of the gas mixture, which concentration detecting means are connected for signal generating to the control means, the control means being adapted to generate to the first and second closing means and the gas treatment means a control signal for extracting a portion of the gas mixture from the space through the supply duct, treating this portion in the gas treatment means and returning it to the space through the discharge duct and for simultaneously generating to the concentration detecting means a control signal for the purpose of performing a concentration detection on the 5 gas mixture for treating. The apparatus of the present application is distinguished from this prior art apparatus in that the control means are adapted for periodic generation of said control signal, and in that the supply duct and the discharge duct are connected by a bypass duct provided with third controllable closing means, and the control means are adapted to generate, between successive gas treatment control signals, at least one control signal to the first, second and third closing means and the concentration detecting means for 5 extracting a portion of the gas mixture from the space through the supply duct, subjecting this portion to a concentration detection and returning it to the space through the discharge duct via the bypass duct.

Preferred embodiments of the apparatus according to the invention are described in the dependent claims 5 and 6.

The invention is now elucidated on the basis of an embodiment, wherein reference is made to the annexed drawing, wherein:

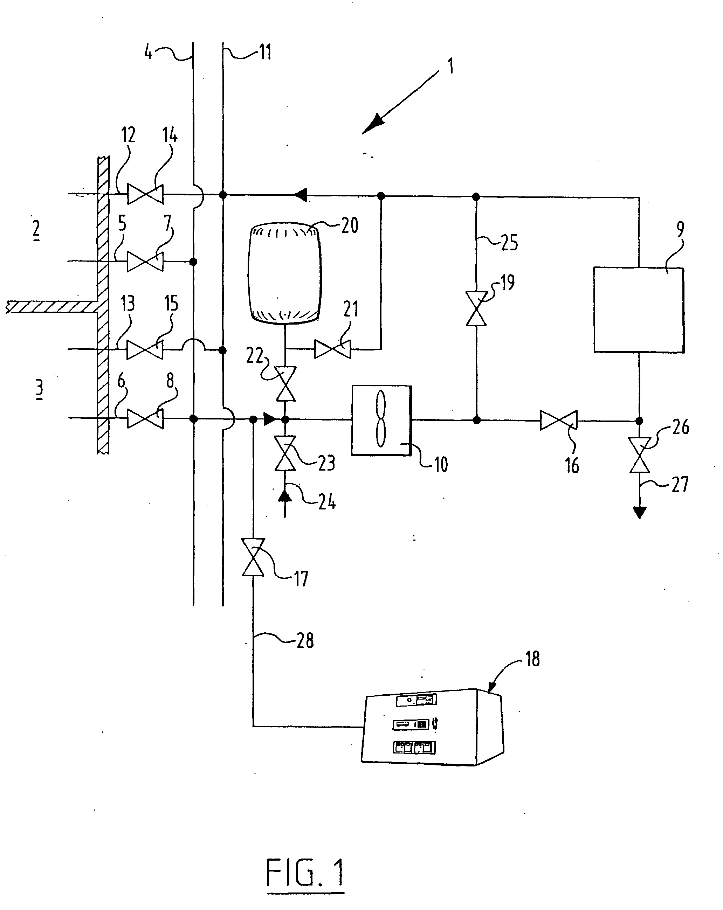

fig. 1 shows a schematic diagram of the apparatus, and
fig. 2 is a perspective view showing the constructional integration of the apparatus.

An apparatus 1 for controlling the composition of the gas mixture present in each of a number of spaces, for instance cooling cells 2, 3, comprises a supply manifold 4 which is connected via first controllable closing means, for instance valves 7, 8, to outlet openings 5, 6 of the cooling cells 2, 3. The supply duct 4 is connected to the inlet side of gas treatment means 9 which are formed for instance by a so-called active carbon scrubber. The outlet side of the gas treatment means 9 is connected to an outlet manifold 11 which likewise has branches which lead via second controllable closing means, likewise in the form of valves 14, 15, to inlet openings 12, 13 of the cooling cells 2, 3. For transport of a gas mixture out of spaces 2, 3 along the gas treatment means 9 a fan 10 for instance is connected in series to the gas treatment means 9. The operation of this fan 10, like that of the gas treatment means 9 and valves 7, 8, 14, 15 is controlled by central control means 18 in the form of a process computer which is connected for signal generating to the different parts of the apparatus.

The gas treatment means 9 operate in per se known manner. Under the influence of the central control means 18 the fan 10 is started periodically or in response to detected changes in the atmosphere inside the cooling cell or cooling cells 2, 3 and the first controllable valves 7 or 8 and the second controllable valves 14 or 15 are opened. Via a likewise controllable valve 16, which is opened under influence of the control means 18, the fan 10 then transports a portion of the gas mixture present in the space 2 or 3 along the gas treatment means 9 which are formed in the shown embodiment by an active carbon scrubber. The thus treated portion of the gas mixture, the CO₂ content of which is reduced in the active carbon scrubber, is then carried back via discharge duct 11 through the controllable valve 14 or 15 to the inlet opening 12 or 13 of cooling cell 2 or 3. At the end of such a gas treatment cycle the valve 14 or 15 is first closed and valve 21 opened, whereby the last remnants of the gas mixture extracted from space 2 or 3, after being guided through scrubber 9, are collected in a collecting container or lung 20. The valve 7 or 8 is subsequently also closed and the fan 10 stopped.

When the active carbon scrubber 9 is saturated it is regenerated by opening the valves 23, 19 and 26 and keeping the other valves closed and by simultaneously starting the fan 10. Ambient air is thereby drawn in through an aperture 24 and guided via a bypass duct 25 to the outlet side of the active carbon scrubber 9 and guided for instance therethrough and returned to the outside environment via an outlet aperture 27. The carbon dioxide (CO₂) adsorbed into the active carbon scrubber 9 is flushed away by the ambient air which flows past. At the end of the regeneration cycle the valves 23 and 19 are finally closed and valve 21 opened, whereby the gas mixture stored in the lung 20 can flow to the active carbon scrubber 9 and there urge the very oxygen-rich ambient air to the outside via outlet aperture 27. This is important since the very oxygen-rich air would otherwise be fed from scrubber 9 to the cooling cells 2, 3 during a subsequent gas treatment cycle.

In order to monitor the state of the atmosphere in spaces 2, 3 samples must be taken therefrom with some regularity. For this purpose the apparatus 1 according to the present invention has a central sample duct 28 which is connected to the supply duct 4 and provided with a controllable valve 17. By taking the sample from that portion of the gas mixture which has in any case already been extracted from the space 2 or 3 for treatment purposes the formerly usual, separate sample ducts to the different cooling cells 2, 3 can be omitted, whereby the manufacturing and installation costs of the apparatus are considerably limited and the operational reliability thereof is improved.

A portion of the gas mixture present in one of the spaces 2, 3 will generally be sucked out of space 2, 3 with some regularity and subjected to a treatment. Herein a sample can optionally be taken each time in order to detect the concentration of the different constituent components of the gas mixture, or only during several of the gas treatment cycles. It will however often be the case that the frequency with which concentration detections are requested is at least as great as the frequency with which parts of the gas mixture present in the spaces must be treated. By opening the first closing means 7, 8, the second closing means 14, 15 and the third closing means 19 and starting the fan 10 a quantity of the gas mixture can therefore be extracted at fixed times from the space 2 or 3 and carried back into the space again via the supply duct 4, the bypass duct 25 and the discharge duct 11 without passing through the gas treatment means 9. A portion of the thus diverted gas mixture can then be guided again in the form of a sample through the duct 28 to the concentration detecting means.

The taken sample is analyzed by concentration detecting means, wherein the concentration of a number of components present in the gas mixture is determined and a check made as to whether this concentration lies within the limits applying for the component. If the concentration of one of the components is found to lie outside the limits applying therefor, a correcting action can be performed, for instance guiding along the gas treatment means of a greater part of the gas mixture present in the space. In addition to the shown gas treatment means 9 in the form of an active carbon scrubber, other gas treatment means can of course also be present such as a nitrogen generator for reducing the oxygen content of the gas mixture.

When the oxygen content of the gas mixture is found to be too low, by opening the second controllable valves 14 or 15, the third controllable valve 19 and the fourth controllable valve 23 while all other valves are closed and by starting the fan 10, ambient air can be drawn in through the central suction aperture 24 and blown into the space 2 or 3. A separate aerating valve in the wall of each cooling cell 2, 3 is hereby no longer necessary, whereby the costs of the apparatus are further reduced and the operational certainty increased.

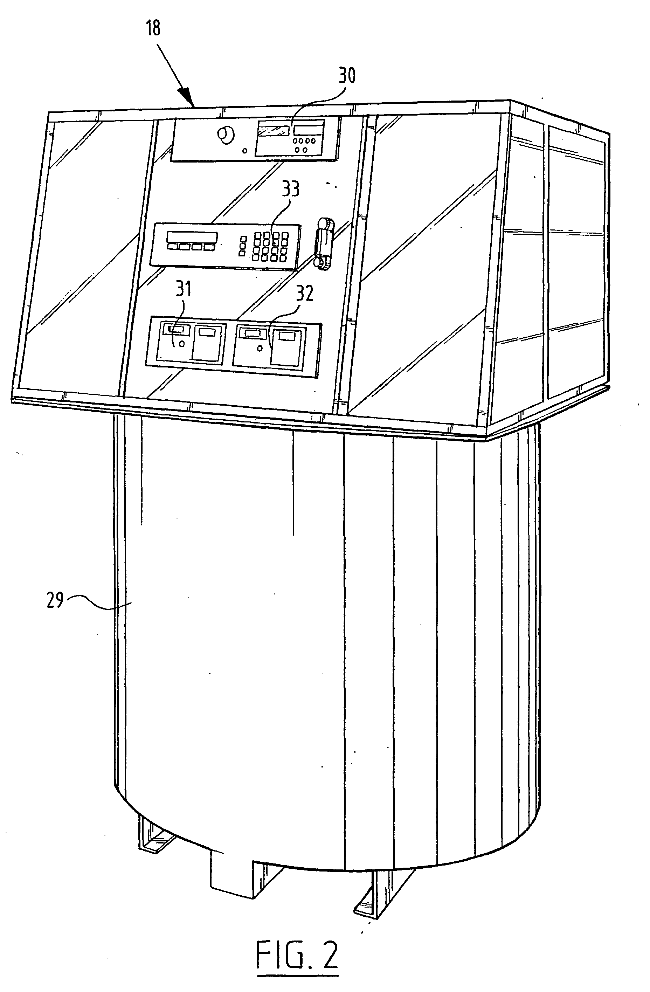

Since the sample duct 28 is connected to the central supply duct 4 and is thus located relatively close to the gas treatment means 9 and the control means 18, the gas treatment means 9, the control means 18 and the concentration detecting means can be constructionally integrated in simple manner. All these components can be accommodated for this purpose in a housing 29 (fig. 2) which can then be further provided with a control panel for the control means 18. The control panel may comprise a number of display devices 30, 31, 32 in addition to input means 33 in the form of a keyboard. By structurally integrating the gas treatment means 9, the control means 18 and the concentration detecting means the apparatus can be manufactured for the greater part in the factory and the installation operations and the associated installation costs at the location of the cooling spaces 2, 3 whose atmosphere has to be monitored and controlled are minimal. The danger of faulty connections by less experienced local servicemen is also reduced.

## Claims

1. Method for controlling the composition of a gas mixture present in a space (2, 3) by detecting the concentration of at least one component of the gas mixture and extracting from the space (2, 3) and subjecting to a treatment at least a part of the gas mixture, the concentration of the at least one component being detected in the part of the gas mixture extracted from the space (2, 3), **characterized in that** a portion of the gas mixture is periodically extracted from the space (2, 3) and subjected to a treatment in accordance with a predetermined program and in that the detection of the concentration is performed periodically in accordance with a predetermined program, the frequency of the periodic concentration detection being at least as great as the frequency of the periodic treatment, and part of the gas mixture extracted from the space (2, 3) for detecting the concentration being carried back into the space (2, 3) without being treated.

2. Method as claimed in claim 1, **characterized in that** the program of periodic extractions is checked and/or adapted on the basis of the thus detected concentration.

3. Method as claimed in claim 1 or 2, **characterized in that** the treatment comprises guiding the part of the gas mixture extracted from the space (2, 3) along active carbon.

4. Apparatus (1) for controlling the composition of a gas mixture present in a space (2, 3), comprising means (9) for treating a gas mixture extracted from the space (2, 3), which means are connected to the space (2, 3) over at least one supply duct (4) provided with first controllable closing means (7, 8) and at least one discharge duct (11) provided with second controllable closing means (14, 15), control means (18) connected for signal generating to the gas mixture treatment means, and means connected to the supply duct (4) for detecting the concentration of at least one component of the gas mixture, which concentration detecting means are connected for signal generating to the control means (18), the control means (18) being adapted to generate to the first and second closing means (7, 8; 14, 15) and the gas treatment means (9) a control signal for extracting a portion of the gas mixture from the space (2, 3) through the supply duct (4), treating this portion in the gas treatment means (9) and returning it to the space (2, 3) through the discharge duct (11) and for simultaneously generating to the concentration detecting means a control signal for the purpose of performing a concentration detection on the gas mixture for treating, **characterized in that** the control means (18) are adapted for periodic generation of said control signal, and in that the supply duct (4) and the discharge duct (11) are connected by a bypass duct (25) provided with third controllable closing means (19), and the control means (18) are adapted to generate, between successive gas treatment control signals, at least one control signal to the first, second and third closing means (7, 8; 14, 15; 19) and the concentration detecting means for extracting a portion of the gas mixture from the space (2, 3) through the supply duct (4), subjecting this portion to a concentration detection and returning it to the space (2, 3) through the discharge duct (11) via the bypass duct (25).

5. Apparatus (1) as claimed in claim 4, **characterized in that** the control means (18) are programmable.

6. Apparatus (1) as claimed in claim 4 or 5, **characterized in that** the control means (18), the concentration detecting means and the gas treatment means (9) are constructionally integrated.

## Patentansprüche

1. Verfahren zum Steuern der Zusammensetzung eines in einem Raum (2, 3) vorliegenden Gasgemischs, indem die Konzentration mindestens eines Bestandteils des Gasgemischs festgestellt und aus dem Raum (2, 3) entnommen und mindestens ein Teil des Gasgemischs einer Behandlung unterzogen wird, wobei die Konzentration des mindestens einen Bestandteils in dem Teil des Gasgemischs festgestellt wird, das aus dem Raum (2, 3) entnommen wird,
dadurch gekennzeichnet, dass ein Teil des Gasgemischs in periodischer Weise aus dem Raum (2, 3) entnommen und gemäß einem vorbestimmten Programm einer Behandlung unterzogen wird, und dass die Feststellung der Konzentration in periodischer Weise gemäß einem vorbestimmten Programm ausgeführt wird, wobei die Frequenz der periodischen Konzentrationsbestimmung mindestens so hoch wie die Frequenz der periodischen Behandlung ist und ein Teil des aus dem Raum (2, 3) zur Bestimmung der Konzentration entnommenen Gasgemischs in den Raum (2, 3) zurückgeführt wird, ohne behandelt zu werden.

2. Verfahren nach Anspruch 1,
dadurch gekennzeichnet, dass das Programm zur periodischen Entnahme auf der Grundlage der somit bestimmten Konzentration kontrolliert und/oder abgestimmt ist.

3. Verfahren nach Anspruch 1 oder 2,
dadurch gekennzeichnet, dass die Behandlung die Führung des aus dem Raum (2, 3) entnommenen Teils des Gasgemischs über eine Aktivkohle umfasst.

4. Vorrichtung (1) zum Steuern der Zusammensetzung eines in einem Raum (2, 3) vorliegenden Gasgemischs, die eine Vorrichtung (9) zur Behandlung des aus dem Raum (2, 3) entnommenen Gasgemischs, welche Vorrichtung über mindestens einen mit einer ersten Steuer-Schließvorrichtung (7, 8) versehenen Zufuhrkanal (4) und mindestens einen mit einer zweiten Steuer-Schließvorrichtung (14, 15) versehenen Auslasskanal (11) mit dem Raum (2, 3) verbunden ist, und eine Steuervorrichtung (18), die zur Signalerzeugung an der Gasgemisch-Behandlungsvorrichtung angeschlossen ist, und eine Vorrichtung aufweist, die an dem Zufuhrkanal (4) zur Messung der Konzentration von mindestens einem Bestandteil des Gasgemischs angeschlossen ist, welche Konzentrationsmessvorrichtung zur Signalerzeugung an der Steuervorrichtung (18) angeschlossen ist und die Steuervorrichtung (18) dazu bestimmt ist, ein Steuersignal für die erste und die zweite Schließvorrichtung (7, 8; 14, 15) und die Gasbehandlungsvorrichtung (9) zu erzeugen, um einen Teil des Gasgemischs durch den Zufuhrkanal (4) aus dem Raum (2, 3) zu entnehmen, wobei dieser Teil in der Gasbehandlungsvorrichtung (9) behandelt und durch den Auslasskanal (11) in den Raum (2, 3) zurückgeführt wird, und um gleichzeitig ein Steuersignal für die Konzentrationsmessvorrichtung zum Zweck der Ausführung einer Konzentrationsmessung des zu behandelnden Gasgemischs zu erzeugen,
dadurch gekennzeichnet, dass die Steuervorrichtung (18) zur periodischen Erzeugung des Steuersignals bestimmt ist, und dass der Zufuhrkanal (4) und der Auslasskanal (11) durch einen Bypass-Kanal (25) miteinander verbunden sind, der mit einer dritten steuerbaren Schließvorrichtung (19) versehen ist, und dass die Steuervorrichtung (18) bestimmt ist, zwischen aufeinanderfolgenden Gasbehandlungs-Steuersignalen mindestens ein Steuersignal für die erste, zweite und dritte Schließvorrichtung (7, 8; 14, 15;19) und die Konzentrationsmessvorrichtung zu erzeugen, um einen Teil des Gasgemischs aus dem Raum (2, 3) durch den Zufuhrkanal (4) zu entnehmen, wobei dieser Teil einer Konzentrationsmessung unterzogen wird und dieser durch den Auslasskanal (11) über den Bypass-Kanal (25) in den Raum (2, 3) zurückgeführt wird.

5. Vorrichtung 1 nach Anspruch 4,
dadurch gekennzeichnet, dass die Steuervorrichtung (18) programmierbar ist.

6. Vorrichtung 1 nach Anspruch 4 oder 5,
dadurch gekennzeichnet, dass die Steuervorrichtung (18), die Konzentrationsmessvorrichtung und die Gasbehandlungsvorrichtung (9) in ihrer Konstruktion integriert vorliegen.

## Revendications

1. Procédé pour commander la composition d'un mélange gazeux présent dans un espace (2, 3) en détectant la concentration d'au moins un composant du mélange gazeux et en extrayant à partir de l'espace (2, 3), et en soumettant à un traitement, au moins une partie du mélange gazeux, la concentration du au moins un composant étant détectée dans la partie du mélange gazeux extraite de l'espace (2, 3), caractérisé en ce qu'une partie du mélange gazeux est extraite périodiquement de l'espace (2, 3) et soumise à un traitement conformément à un programme prédéterminé et en ce que la détection de la concentration est effectuée périodiquement conformément à un programme prédéterminé, la fréquence de la détection périodique de la concentration étant au moins aussi grande que la fréquence du traitement périodique, et une partie du mélange gazeux extraite de l'espace (2, 3) pour détecter la concentration est renvoyée dans l'espace (2, 3) sans avoir été traitée.

2. Procédé selon la revendication 1, caractérisé en ce que le programme d'extractions périodiques est surveillé et/ou adapté sur la base de la concentration ainsi détectée.

3. Procédé selon la revendication 1 ou 2, caractérisé en ce que le traitement consiste à guider la partie du mélange gazeux extraite de l'espace (2, 3) le long de charbon actif.

4. Dispositif (1) pour contrôler la composition d'un mélange gazeux présent dans un espace (2, 3), comportant des moyens (9) pour traiter un mélange gazeux extrait de l'espace (2, 3), lesquels moyens sont reliés à l'espace (2, 3) par au moins un conduit d'alimentation (4) muni de premiers moyens de fermeture pouvant être commandés (7, 8) et par au moins un conduit d'évacuation (11) muni de deuxièmes moyens de fermeture pouvant être commandés (14, 15), des moyens de commande (18) reliés pour envoyer un signal vers les moyens de traitement de mélange gazeux, et des moyens reliés au conduit d'alimentation (4) pour détecter la concentration d'au moins un composant du mélange gazeux, lesquels moyens de détection de concentration sont reliés pour envoyer un signal aux moyens de commande (18) , les moyens de commande (18) étant adaptés pour envoyer vers les premiers et deuxièmes moyens de fermeture (7, 8 ; 14,15) et les moyens de traitement de gaz (9) un signal de commande pour extraire une partie du mélange gazeux de l'espace (2, 3) à travers le conduit d'alimentation (4), traiter cette partie dans les moyens de traitement de gaz (9) et la renvoyer vers l'espace (2, 3) à travers le conduit d'évacuation (11) pour envoyer simultanément aux moyens de détection de concentration un signal de commande dans le but d'effectuer une détection de concentration sur le mélange gazeux pour traiter, caractérisé en ce que les moyens de commande (18) sont adaptés pour l'envoi périodique dudit signal de commande, et en ce que le conduit d'alimentation (4) et le conduit d'évacuation (11) sont reliés par un conduit de dérivation (25) muni de troisièmes moyens de fermeture pouvant être commandés (19) , et les moyens de commande (18) sont adaptés pour envoyer, entre des signaux de commande de traitement de gaz successifs, au moins un signal de commande aux premiers, deuxièmes et troisièmes moyens de fermeture (7, 8 ; 14, 15 ; 19) et aux moyens de détection de concentration pour extraire une partie du mélange gazeux de l'espace (2, 3) à travers le conduit d'alimentation (4), soumettre cette partie à une détection de concentration et la renvoyer vers l'espace (2, 3) à travers le conduit d'évacuation (11) via le conduit de dérivation (25) .

5. Dispositif selon la revendication 4, caractérisé en ce que les moyens de commande (18) sont programmables.

6. Dispositif selon la revendication 4 ou 5, caractérisé en ce que les moyens de commande (18), les moyens de détection de concentration et les moyens de traitement de gaz (9) sont intégrés dans une construction.
